# EUROPEAN PATENT APPLICATION

(11) **EP 2 724 839 A1**
(43) Date of publication of application: **30.04.2014**
(21) Application number: 12007411.7
(22) Date of filing: 29.10.2012
(51) Int. Cl.: B29C 63/02, B60R 13/00

(54) **Method for protecting vehicle surfaces**

(71) Applicant: Agard, Thierry, 62520 Le Touquet (FR)
(72) Inventor: Agard, Thierry, 62520 Le Touquet (FR); Sirlereaux, Serge, 67547 Worms (DE)
(74) Representative: Wagner, Jutta

(57) **Abstract**

The present invention relates to a method for protecting vehicle surfaces comprising the steps of providing a deformable, self-adhesive sheet, flocking the sheet with fibres, and attaching the flocked sheet to the surface.

## Description

The present invention relates to a method for protecting vehicle surfaces.

The surface of cars and other vehicles, e.g. motorcycles, scooters, minivans, trucks, trains and the like, is exposed to weathering and to dirt, which can deteriorate the surface. Especially anti-freeze and bird droppings are considered harmful even for modern car finish.

Further, it is known to decorate or mark vehicles by applying stickers. A full or partial change of colour can be achieved by adhering a sheet to the surface. Besides the decorative effect such a sheet also provides protection to the surface. Protection is the main objective of transparent sheets applied to areas where typically mechanical stress occurs like the running boards and the loading or trunk sill. However, cleaning of such decorative applications or protective sheets is usually more difficult than for the original surface.

There remains the problem of protecting vehicle surfaces from deterioration and furthermore the object to allow for individual decoration.

It has surprisingly been found that it is possible to achieve these objects with deformable, self-adhesive sheets with flocking.

The self adhesive sheets are suitable to protect the surface of vehicles while providing an interesting design at the same time. Thus, the present invention relates to the protection of vehicle surfaces comprising the steps providing a conformable, self-adhesive sheet, flocking it with fibres and adhering it to the surface.

Surprisingly the vehicle surface obtained by the method of the invention eases cleaning, although one would expect that dirt is more diffcult to remove from the rough flocked surface and/or adheres more easily to it. But it was found that the flock is cleaned by rain and also slightly wiping over the surface is able to remove dirt adhering to it. The protective effect is enhanced by the fibres, they contribute to filtering UV light and provide additional protection against mechanical impact.

Since the sheet is deformable, it can also be adhered in an accurately fitting manner to curved surfaces, such as vehicle surfaces.

Deformable, self-adhesive sheets for protecting or decorating vehicle surfaces are known per se. According to the prior art, however, these are provided with the smoothest possible surface so as to prevent the adhesion of dirt and to ensure low drag resistance.

All sufficiently abrasion-resistant, saltwater-resistant and UV-stable plastics are suitable material for the sheet used according to the invention. Preferred materials for the sheets according to the invention include polyvinyl chloride (PVC), polyurethanes (PUs), butadiene-based and isoprene-based polymers, and polyolefins such as polyethylene (PE) and polypropylene (PP). Polymers based on vinyl monomers, in particular polyvinyl chloride (PVC), are particularly preferred. Films based on PVC and/or ethylene vinyl acetate (EVA) are likewise well suited.

In a manner known per se, the sheet may have additives and added substances, which are used in the normal amounts. For example, plasticisers, stabilisers and, if desired, pigments and/or dyes are contained in the case of PVC sheets. For example, 60 to 70 % by weight PVC; 5 to 10 % by weight EVA; 15 to 25 % by weight polymer plasticiser; 2.0 to 3.0 % by weight barium/zinc stabiliser; 5 to 10 % by weight modifier and 0.5 to 10 % by weight light stabiliser are typical in the case of a suspension PVC (S-PVC). The amount of pigments/dyes depends on the desired colour. It is possible to provide biocide active ingredients in the sheet material.

Within the scope of the present invention, "deformable" means that the sheet has an elongation at break of at least 100 %, perferably at least 200 %. The 2 % module is from 15 to 25 N/15 mm. The tensile stength is at least 15 N/15 mm and preferably lies in the range of 25 to 40 N/15 mm. The elongation at break, 2 % module and tensile strength are measured in accordance with DIN EN 527 3/2/200.

The sheets according to the invention are produced in a manner known per se, for example on calenders. Multi-layer sheets, which may have two, three or even more layers, are obtained by coextrusion, direct extrusion or lamination. These methods are known to a person skilled in the art.

The sheet is coated with a pressure-sensitive adhesive so that it can be adhered directly to the surface to be protected. In principle, all adhesives that demonstrate sufficient resistance to weathering and good adhesion, both to the sheet and to surfaces made of metal, wood, paint, etc., are especially suitable. A pressure-sensitive adhesive based on acrylates is preferably used.

Adhesives and fibres that are suitable for the relatively long contact with water are used for flocking. For example, polyamide fibres and polyester fibres are well-suited fibres. The selected fibres also have to be weather resistant. The exposure to UV is severe for sheets used to protect and decorate vehicles. The fibres are chosen for tactile, technical and aesthetic purposes. Suitable fibres are cotton fibres, viscose fibres, polyamide fibres, polyester fibres, acrylic fibres etc., particularly acrylic fibres.

In a variant, fibre mixtures are used so as to obtain a fibre web containing both hydrophobic and hydrophilic fibres. In this case, the surface tension (measured in accordance with DIN 53364) should be > 50 dyn, preferably > 60 dyn, for the hydrophilic fibres and < 30 dyn, preferably < 20 dyn, for the hydrophobic fibres.

The fibre length can vary from 0.3 mm to 2 mm, and for vehicle wrapping, a length between 0.5 mm and 1 mm is particularly preferred. The fibre size can vary from 0.9 dtex up to 5.6 dtex and preferably is about 2.2 dtex. The fibres can be either "random cut" or preferably "precision cut".

Flocking is carried out with fibre densities in the range of 30 to 160 g/m² and more preferably from 60 to 120 g/m² and especially preferred from 80 to 100 g/m².

Water-resistant adhesives that are matched to the sheet are selected as an adhesive for anchoring the fibres. For example, plastisols, which are conventional for the production of flocked T-shirts, are suitable for PVC films. A typical formulation comprises PVC, plasticiser, filler and adhesive strength promoter.

To produce the sheets used in accordance with the invention for protection, the deformable sheet is first provided with a self-adhesive coating by means of the pressure-sensitive adhesive. The adhesive can be applied e.g. dissolved in a solvent. The pressure-sensitive adhesive is/will be covered preferably by a release liner, for example siliconised paper. The self-adhesive sheet is then coated with the adhesive to anchor the fibres and is then flocked in a manner known *per* se. The sheet is then normally wound onto rolls, where it is stored.

For application to the surface to be protected, the surface is cleaned, if necessary, so as to remove adhering dirt. The surface should be clean, greasefree and dry. The sheet is placed over the surface and pressed on, where necessary after having been cut to size and/or after detachment of the release liner.

The sheet is preferably stuck down edge-to-edge. Gaps between adjacent sheetstripes can be closed easily and quickly by pieces of sheet cut to size accordingly. A coating with adhesive is not necessary for this purpose, and there is therefore also no risk of gluing, with the adhesive, of the fibres in the flocked sheets already attached. It is also possible to form an edge of the sheet in a narrow strip without fibres and to glue the sheet in an overlapping manner. In a further variant, it is conceivable, once adhered, for the fibres to be removed in a strip bridging the joint and for the joint to be covered by a strip of flocked sheet. In this case, the strip may have the same structure as the sheet, or, for example with use of a biocide, may have a higher concentration thereof or may comprise a biocide.

The sheet is especially suited to protect and decorate the surface of vehicles. The decorative possibilites are plentiful. The fibres can be coloured, whereby colours of the fibres are obtained by normal bath dyed or spun dyed or other dye processes. Preferred are spun dyed fibres which are dyed into their core. There can also be patterns of fibres, wherein the fibres can be applied continuously (full flocking) or partially (selective flocking) on rolls or sheets.

For full flocking the surface is totally covered with fibres which provides a velvet or suede texture. The sheet can also be printed prior to flocking by screen print, offset, numeric, digital, helio etc. to give it a background colour or a motif with one or several colours. A full flocking, preferably with transparent fibres, then provides a soft texture on the printing. With selective flocking motifs either flocked or in reverse are possible. When the sheet is previously printed the flocked motives can be registered or non-registered on the print, on all the width of the roll or the sheets size. Likewise, transparent sheets flocked with transparent fibres allow a print of the vehicle surface to remain visible. It is also possible to combine transparent and opaque areas on the flocked sheet to combine a decorative design of the sheet with a design already present on the vehicle surface.

An over flocking is also possible, meaning that the sheet is fully flocked on the surface and then a second flocking layer is applied on that layer, usually as selective flocking.

The sheet for vehicle wrapping can also be embossed by heat, which marks a motif and/or design on the surface of the flocked film (lace, flowers, logo, textile patterns etc...).

The flock fibres can also be mixed to obtain a shiny, glitter, metallic, fluorescent and/or phosphorescent aspect. The use of specific fibres, especially trilobal fibres, mixed with conventional fibres allows to obtain a more or less shiny aspect depending on percentage used, which can range from 1 to 100%.

The invention will be explained on the basis of the following examples, although it is not limited to the embodiments described specifically. Unless indicated otherwise and unless otherwise imperatively clear from the context, percentages relate to weight, and where in doubt to the total weight of the mixture.

The invention relates to all combinations of preferred embodiments, unless these are mutually exclusive. The expressions "about" or "approximately" in conjunction with a number means that at least values 10 % higher or lower, or values 5 % higher or lower, and in any case values 1 % higher or lower, are also included.

### Example 1

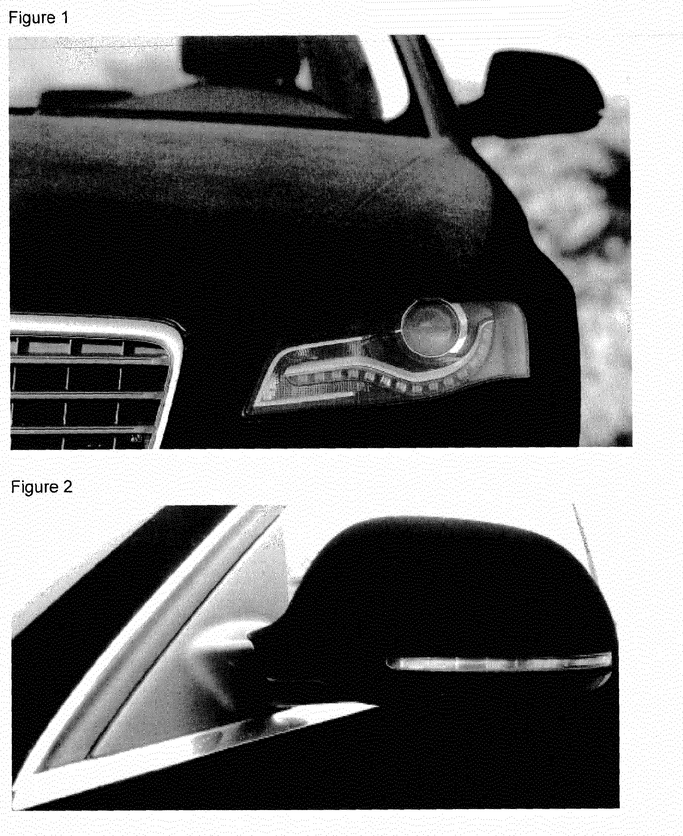

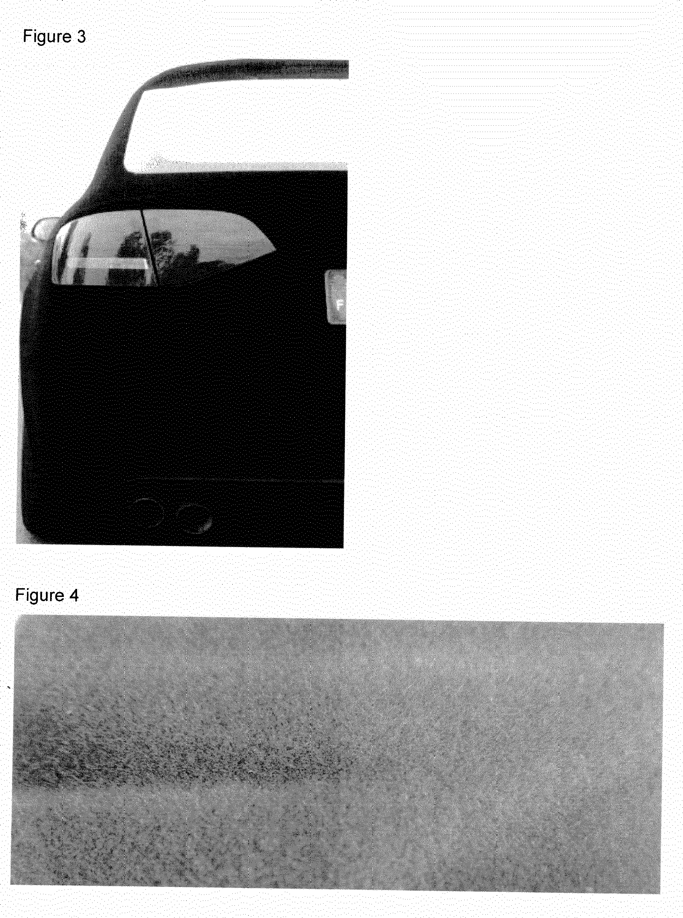

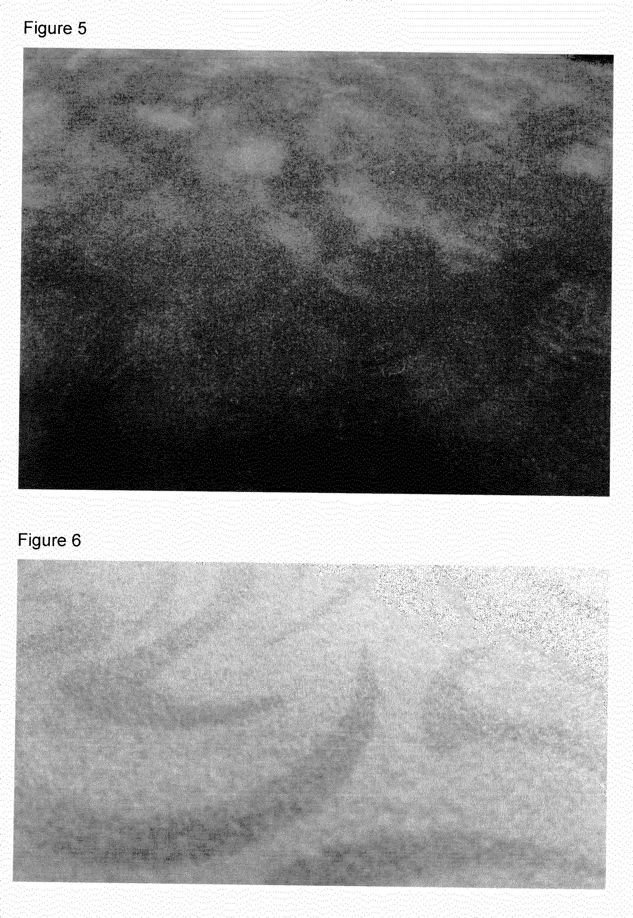

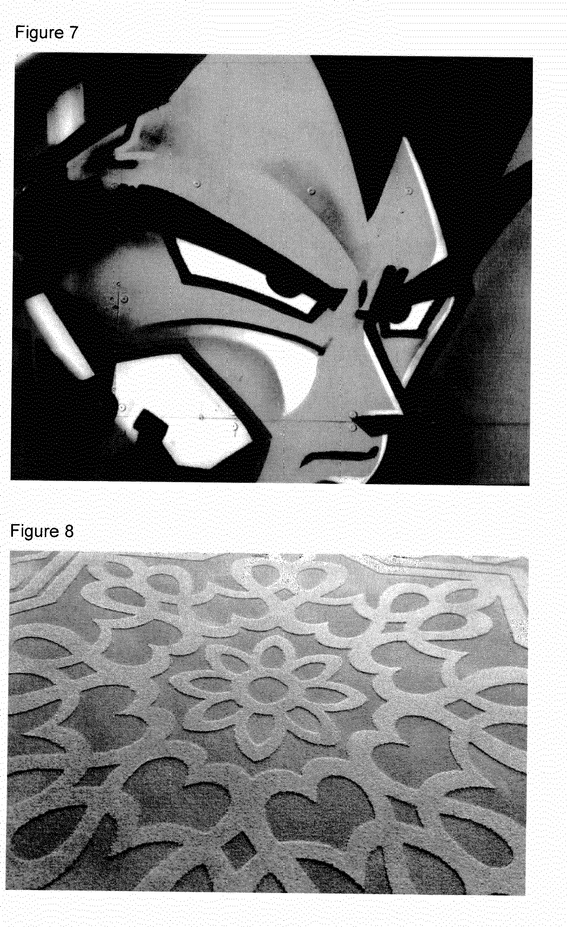

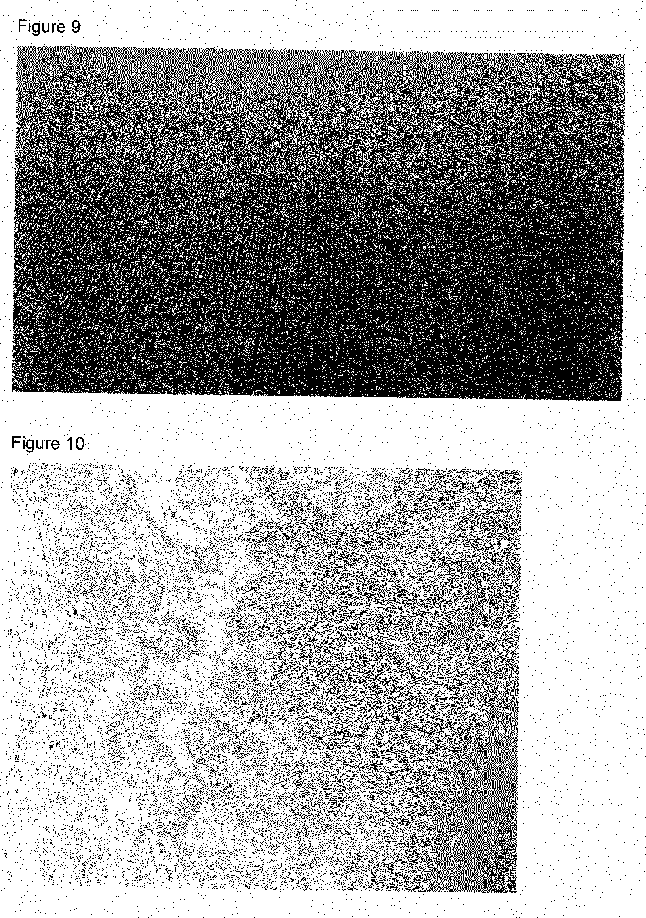

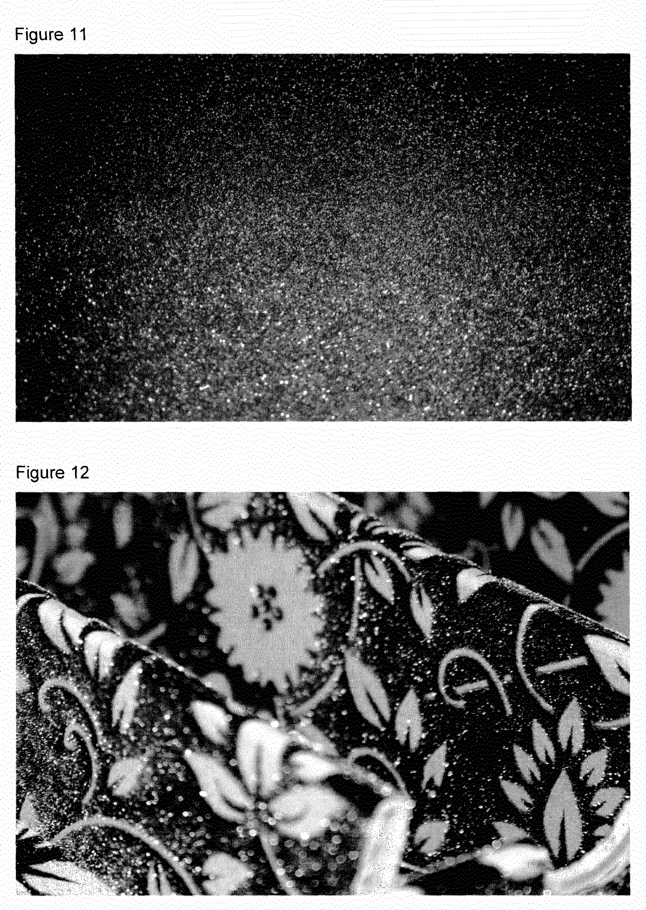

A variety of car surfaces protected and/or decorated according to the invention and sheets for this are shown in the attached figures 1 to 12.

Figures 1 to 3 show details of a car with a surface protected by a flocked sheet according to the invention. It can be seen that the sheet smoothly adheres to the surface, also at contours and edges.

Figure 4 shows a uni coloured sheet and flock providing a velvet look and feel.

Figure 5 shows a suede look obtained by a mechanical movement of objects coming on the surface of the flocked sheet before the polymerization to give a non uniform look of velvet.

Figure 6 shows a printed sheet with transparent flock. The print can be seen through the flock.

Figure 7 shows a selective flocking (black parts).

Figure 8 shows a full flocking with a selective flocking with differently coloured fibres on top.

Figures 9 and 10 show embossed flocking, that provides yet another interesting design.

Figure 11 shows a flocking with 30 % of trilobal fibres providing a glitter or metallic design.

Figure 12 shows another selective flocking on a printed sheet.

## Claims

1. Method for protecting vehicle surfaces comprising the steps of providing a deformable, self-adhesive sheet
flocking the sheet with fibres
attaching the flocked sheet to the surface.

2. Method according to claim 2, wherein the surface is the surface of a car, motorcycle, mini-van, truck, bus, or train, especially a car surface.

3. Method according to claim 1 or 2, wherein the fibre length ranges from 0.3 mm to 2 mm, preferably from 0.5 mm to 1 mm.

4. Method according to claim 1, 2 or 3, wherein the fibre size ranges from 0.9 dtex to 5.6 dtex and preferably is about 2.2 dtex.

5. Method according to at least one of claims 1 to 4, wherein the density of applied fibres can vary from 30 to 160 g/m² and more specifically from 60 to 120 g/m², and especially preferred from 80 to 100 g/m².

6. Method according to at least one of claims 1 to 5, wherein the sheet has an elongation at break of at least 100 % and a tensile strength of at least 15 N/15mm.

7. The method according to at least one of claims 1 to 6, **characterised in that** fibre mixtures are used so as to obtain a fibre web containing both hydrophobic and hydrophilic fibres, wherein the surface tension (measured in accordance with DIN 53364) is > 50 dyn for the hydrophilic fibres and < 30 dyn for the hydrophobic fibres.

8. The method according to at least one of claims 1 to 7, **characterised in that** the sheet is glued edge-to-edge.

9. The method according to claim 8, **characterised in that** the fibres are removed or are not applied in the region of the joint, and the joint is masked by a strip.

10. The method according to at least one of claims 1 to 7, **characterised in that** the sheet is formed with a fibre-free edge region and is glued in an overlapping manner.
